Europäisches Patentamt

European Patent Office

Office européen des brevets

(11) Veröffentlichungsnummer : **0 121 745**
**B1**

(12) **EUROPÄISCHE PATENTSCHRIFT**

(45) Veröffentlichungstag der Patentschrift :
08.07.87

(51) Int. Cl.⁴ : **B 62 B   3/00**

(21) Anmeldenummer : **84102297.3**

(22) Anmeldetag : **03.03.84**

(54) **Transport- und Verkaufswagen.**

(30) Priorität : **09.03.83 DE 3308314**

(43) Veröffentlichungstag der Anmeldung :
**17.10.84 Patentblatt 84/42**

(45) Bekanntmachung des Hinweises auf die Patenterteilung : **08.07.87 Patentblatt 87/28**

(84) Benannte Vertragsstaaten :
**AT BE CH DE FR GB IT LI LU NL SE**

(56) Entgegenhaltungen :
**DE-A- 2 800 575**
**DE-U- 7 524 213**
**FR-A- 2 041 593**
**FR-A- 2 381 652**
**GB-A- 1 486 185**
**GB-A- 1 595 691**
**US-A- 3 868 123**

(73) Patentinhaber : **Akkerman GmbH**
**Transportgerätebau Banhofstrasse 14 Postfach 1161**
**D-4193 Kranenburg (DE)**

**NBV - Niederrheinische Blumenvermarktung eG.**
**Postfach 200 Hammerlandstrasse 103**
**D-4040 Neuss (DE)**

(72) Erfinder : **Akkerman, Helmut**
**Nymeger Strasse 13**
**D-4193 Kranenburg Kr. Kleve (DE)**

**Beschreibung**

Die Erfindung bezieht sich auf einen Transportwagen entsprechend dem Oberbegriff des Patentanspruchs 1. Ein derartiger Transportwagen ist aus der DE-A-2 800 575 bekannt.

Topfblumen-Etagenwagen werden u. a. auf Topfblumen-Versteigerungen, in Großmärkten, bei Großhändlern, in Gartenbaubetrieben und Blumengeschäften zum innerbetrieblichen Transport von Topfblumen und Pflanzen, insbesondere auch zum Transport auf LkW im sogenannten Container-Betrieb von Ort zu Ort und von Betrieb zu Betrieb eingesetzt.

Die Etagen müssen, in Anpassung an die Höhe der Topfpflanzen bzw. ihrer Verpackungen, innerhalb des Transportwagens höhenverstellbar sein, und zwar auch bei vollbeladenen Etagen. Wegen der unterschiedlichen Höhe der Pflanzen und Verpackungen müssen auch unterschiedlich und beliebig viele Etagen eingelegt werden können. Diese Etagen müssen zur übersichtlichen Ausstellung der Ware auch zu einer Schräglage (Längsseite) eingerastet werden können.

Nicht nur die Etagen der Transportwagen müssen aus Kostengründen platzsparend mit Topfblumen beladen werden können, sondern auch die LkW mit den beladenen Transportwagen.

Angestrebt wird die Anpassung des Transport- und Verkaufswagens an die Maße der bekannten EUROPA-PooL-Paletten. Die äußeren und inneren Maße der Transportwagen sollten möglichst wenig voneinander abweichen.

Die bisher bekannten und bei vorgenannten Betrieben eingesetzten Transportwagen mit höhenverstellbaren Etagen sind so ausgebildet, daß die Etagenträger in die Ecken der Etagen hineinragen und diese dadurch nicht ganz zur Beladung ausgenutzt werden können (Platzverlust). Bei anderen Transportwagen stehen die Etagenträger oder Eckstützen seitlich neben den Etagen, da diese sonst nicht höhenverstellbar sind oder herausgenommen werden können. Bedingt ist dadurch ein nicht unerheblicher Platzverlust auf dem LkW und in den Verladehallen. Bei anderen bekannten Transportgeräten benötigen die Einrasthaken der Etagen zwischen den Etagen und den Etagenträgern zuviel verlorenen Platz.

Bei fast allen bekannten Topfblumen-Etagenwagen kann die Höhenverstellung vollbeladener Etagen nur von zwei Personen gemeinsam vorgenommen werden. Bei einem vorbekannten Wagen des Typs « NBV-Stellage » kann die Höhenverstellung zwar durch eine Person durchgeführt werden ; benötigt wird dazu jedoch eine Stange, die nach seitlichem Anheben der Etage in die Aufhängehaken der Etagenträger gelegt werden muß. Die losen Stangen gehen jedoch leicht verloren oder verbiegen. Außerdem ist das Versetzen, besonders bei beladenen Etagen, mit erheblichem Kraftaufwand verbunden.

Bei dem Transportwagen nach der DE-A-28 00-575 und dem Topfblumen-Wagen Typ « Bottrop V », die bis auf geringfügige Abweichungen im Aufbau identisch sind, ist eine Höhenverstellung und eine Schrägstellung voll beladener Etagen nicht möglich.

Bei vollbeladenen Etagen sind auch die ausgesparten Ecken in den Etagen mit den rechteckigen Verpackungen der Topfpflanzen ausgefüllt. Diese Aussparungen in den Etagen sind aber erforderlich, damit leere Etagen herausgenommen oder verstellt werden können. Die Tragorgane (Fig. 2 der DE-A-28 00 575) können ohne die Aussparungen in den Etagen nicht tief genug in die Löcher oder den Spalt der Etagenträger eingeführt werden, damit sie an den gegenüberliegenden Etagenträgern frei werden.

Das gleiche gilt für den Transportwagen nach der Bauweise des DE-U-75 24 213. Das Anheben der beladenen Etage an einer Kopfseite des Wagens kann nur mit einer Hand erfolgen, da gleichzeitig mit der zweiten Hand das Einstellen der drehbaren Sperrklinken — zuerst an einem, dann am zweiten Etagenträger — erfolgen muß. Der Vorgang ist schwierig, kraftaufwendig und hat sich in der Praxis nicht bewährt.

Bei dem bekannten Transportwagen nach der DE-A-28 00 575 können die leeren Etagen zwar platzsparend transportiert werden, indem die Etagenträger dieser Karre in der Buchse so gedreht werden, daß ihre sonst an der Außenseite des Etagenträgers ausgebildeten Spalten dann paarweise gegeneinander gerichtet sind. Durch diesen Spalt können die Rastmittel der Etagen und somit die Etagen bis zum Fahrgestell herabgleiten und die Etagen dort gestapelt werden. Die Etagenträger müssen aber auf dem Fahrgestell verbleiben, da sonst die leeren Etagen abrutschen würden.

Der Erfindung liegt die Aufgabe zugrunde, einen Transportwagen der eingangs genannten Art so auszubilden, daß folgende Voraussetzungen erfüllt werden :

Innen- und Außenmaße der Transportwagen sollten möglichst wenig voneinander abweichen.

Auch vollbeladene Etagen sollen von nur einer Person innerhalb der Etagenträger des Transportwagens mit möglichst wenig Kraftaufwand schnell höher oder niedriger verstellt werden können, und zwar in Anpassung an die Höhe der jeweils zu transportierenden Blumen oder Güter. Die Auflagestangen für die Etagen sollen fest mit der Etage verbunden sein und nicht verlorengehen können. Es soll kein Platz zwischen Etage und Etagenträger für die Einrasthaken der Etagen verlorengehen.

Bei Benutzung als Verkaufs- und Ausstellungswagen sollen die Etagen auch in eine Schräglage eingerastet werden können, wobei eine Längsseite der Etage tiefer liegt als die andere und dadurch eine bessere Übersicht auf die ausgestellte Ware gegeben ist.

Die Etagenträger müssen herausnehmbar und untereinander auswechselbar sein, und zwar auch dann noch, wenn beliebig viele Etagen auf dem Fahrgestell aufliegen, wie es beim Rücktransport der leeren Transportwagen erwünscht ist.

Beim Rücktransport unbeladener Transportwagen soll eine platzsparende, verschiebungssichere Zusammenlegung der zum Lieferumfang gehörenden Etagen erfolgen können, und es sollen auch mehrere Fahrgestelle, mit bis zu fünf Etagen beladen, verschiebungs- und rutschsicher aufeinander gestellt werden können.

Diese Aufgaben werden erfindungsgemäß durch die Merkmale des Anspruchs 1 gelöst.

Durch diese Ausbildung kann bei einer Betätigung des Einrastmechanismus das Anheben, Absenken oder Schrägstellen einer Etage durch eine Bedienungsperson in einfacher Weise durchgeführt werden.

Es ist zweckmäßig, sowohl die Aufsteckhalterungen auf dem Fahrgestell, als auch die Etagenträger winkelförmig (rechtwinkelig) auszubilden.

Die winkelige Ausführung der Aufsteckhalterungen und der Etagenträger erlaubt eine fast 100 %ige Ausnutzung der Etagen-Ladefläche. Die ebenfalls rechtwinekligen Verpackungsarten für Topfpflanzen können also bis fest in diese Winkel der Etagenträger hineingesetzt werden.

Bei neben- oder hintereinander stehenden Transportwagen stehen auch die Etagen fest aneinander, so daß auch die Ladeflächen der LkW oder die Stellflächen in den Verkaufs- und Verladehallen voll ausgenutzt werden können.

Die höhenverstellbaren und herausnehmbaren Etagen sind an den beiden Kopfenden mit einer in der ganzen Breite der Etage in der Etage untergebrachten drehbaren Stange, die somit nicht verlorengehen kann, ausgerüstet. An den beiden Enden der Stange sind im rechten Winkel zur Stange zwei ebenfalls rechtwinkelige Haken angebracht. In der Mitte der Stange befindet sich ein Hebel in Form eines Flachstabes.

Die Etagenträger aus speziell gefertigten Winkel-Hohlprofilen sind an dem inneren Steg des Hohlprofils mit einer durchgehenden Lochreihe versehen, die als Auflage für die beweglichen Haken der Etage dienen ; im eingerasteten Zustand — also bei in die Etagenträger eingelegter Etage — steht der Hebel an der drehbaren Stange waagerecht von der Etage ab. Die Höhenverstellung einer Etage kann von einer Person, auch bei vollbeladener Etage, alleine vorgenommen werden.

Die Etage wird zuerst an einer Kopfseite kurz angehoben. Dadurch rasten die Haken aus den Löchern der Etagenträger selbsttätig aus. Durch sein Eigengewicht fallen der Hebel und die mit ihm über die Stange verbundenen Haken um 90° herunter. Die Etage kann jetzt, innerhalb der beiden Etagenträger, frei nach oben oder unten bewegt werden. Durch Anziehen des Hebels in die waagerechte Stellung rasten die Haken selbsttätig wieder in die nächst höher- oder tieferliegenden Löcher ein. Der Mechanismus erlaubt eine Höhenverstellung um zwei Löcher nach oben oder unten.

Nach der Höhenverstellung an der einen Kopfseite kann im ebenso handlichen Verfahren die Etage auch auf der anderen Kopfseite verstellt werden, bis die waagerechte Einstellung dem gewünschten Höhenunterschied zwischen den Etagen entspricht.

Bei gewünschter Schräglage der Etagen (Ausstellung der Ware) wird an jeder Kopfseite des Wagens nur ein Einrasthaken um je ein Loch höher oder tiefer gesetzt.

Die Etagenträger können leicht aus den ebenfalls winkelförmigen Aufsteckhalterungen herausgezogen und bei Bedarf wieder aufgesteckt werden.

Der Abstand (Hohlraum) zwischen den Stegen des Hohlprofils ist äußerst gering, um wenig Platz zu verlieren. Die Etagenträger sind untereinander auswechselbar und passen an beiden Kopfseiten auf die Aufsteckhalterungen.

Zum Rücktransport mehrerer leerer Transportwagen können die Etagen über den Hebelmechanismus ausgerastet und bis zum Fahrgestell heruntergelassen werden. Beim Auflegen der Etage auf das Fahrgestell, bzw. auf die bereits heruntergelassenen anderen Etagen, wird der herunterhängende Hebel um 90° nach innen gedrückt, wo er sich der Form der unter ihm liegenden Etage anpaßt. Die Verstärkungsprofile der Etagen sind so ausgebildet, daß sie unverrückbar fest ineinander liegen und die Regalträger herausgezogen werden können.

Es können beliebig viele Etagen verschiebungsfest auf das Fahrgestell aufgelegt werden. Allerdings nur die zum Lieferumfang gehörenden fünf Etagen, wenn beispielsweise beim Rücktransport auf einem LkW platzsparend mehrere Fahrgestelle mit bis zu fünf Etagen aufeinander transportiert oder auch gelagert werden sollten.

Zur Gewährleistung eines sicheren, verschiebungsfreien Stapelns mehrerer Einheiten von Fahrgestellen mit je fünf Etagen sind die an den Wagenecken angeordneten Aufsteckhalterungen nach unten, also unterhalb der Ladefläche, verlängert und ebenfalls rechtwinkelig ausgebildet. Sie werden als Aufsatzecken um die Materialstärke der Aufsteckhalterungen nach außen versetzt. Bei aufeinandergestapelten Fahrgestellen schieben sich die Aufsteckhalterungen innen in die Aufsatzecken hinein.

Das obere Fahrgestell ruht auf der Aufsteckhalterung des unteren Wagens. Die Räder sind frei. Ein Verschieben der aufeinandergestapelten Fahrgestelle ist nicht möglich.

Die herausgenommenen Etagenträger mehrerer Transportwagen können zum Rücktransport oder zur Lagerung waagerecht auf ein leeres Fahrgestell gelegt werden, bei dem die vier Etagenträger stehen bleiben, die damit ein seitliches Abrutschen der aufgelegten Etagenträger verhindern.

Die Erfindung wird nachstehend anhand der Zeichnungen näher erläutert.

Es zeigt :

Figur 1 den erfindungsgemäßen Topfblumen-Etagenwagen mit dem Fahrgestell und dem Etagenaufbau,

Figur 2 im größeren Mabstab eine Ecke des Transportwagens mit dem Fahrgestell, der Aufsteckhalterung, einer Aufsatzecke und einem Etagenträger,

Figur 3 das Kopfende einer Etage mit dem eingebauten Einrastmechanismus, bestehend aus der Stange mit den beiden Einrasthaken und dem Hebel, in drei Stellungen,

Figur 4 einen Etagenträger mit den Löchern und den Einraststellungen des Einrastmechanismus und

Figur 5 die Seitenansicht der Ecken von zwei aufeinandergestapelten, mit Etagen beladenen Transportwagen.

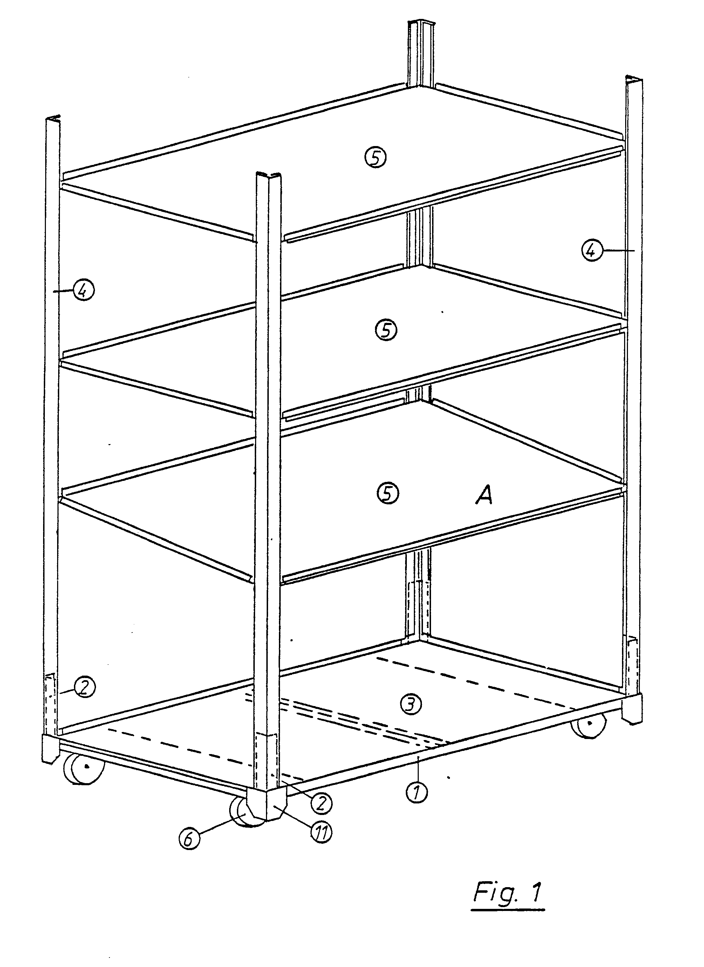

Der in Figur 1 dargestellte Transportwagen zeigt ein Fahrgestell 1, das an jeder Ecke mit einer im Querschnitt rechtwinkeligen Aufsteckhalterung 2 versehen ist und im dem das untere, fest eingebaute Bodenblech 3 liegt. Auf den Aufsteckhalterungen 2 sind die abnehmbaren Etagenträger 4 senkrecht aufgesetzt, die die Etagen 5 tragen. Das Fahrgestell hat vier untergebaute Räder 6. A zeigt eine Etage in der Schräglage.

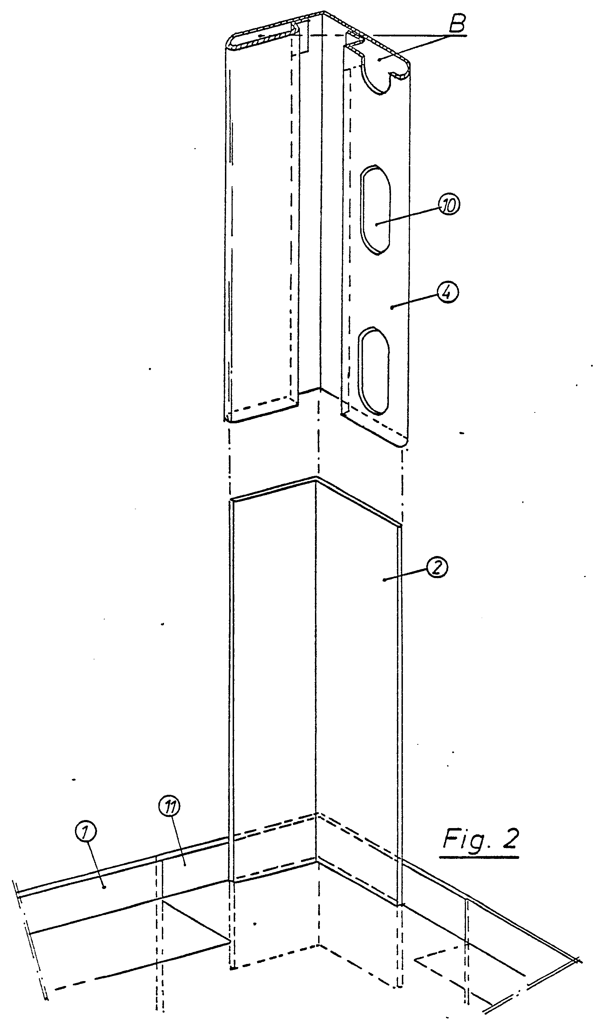

Figur 2 zeigt einen unteren Eckbereich des Transportwagens mit dem Fahrgestell 1, der Aufsteckhalterung 2, der Aufsatzecke 11 und dem unteren Teil eines Etagenträgers 4 mit einer Lochreihe 10, der auf eine Aufsteckhalterung 2 aufgesetzt ist. B zeigt das Hohlprofil des Etagenträgers 4.

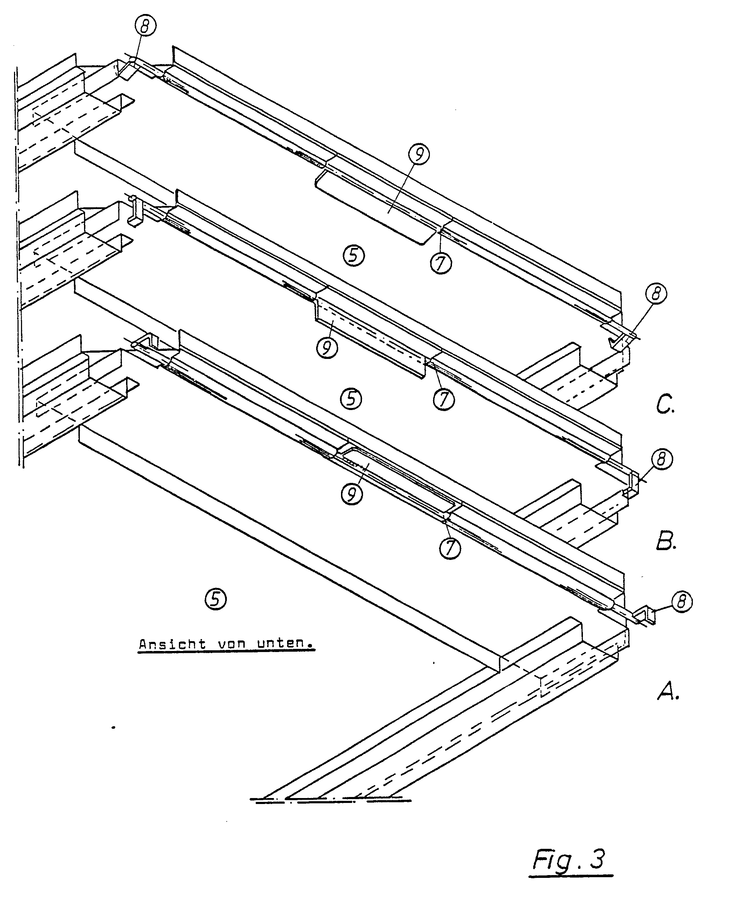

Figur 3 zeigt die Kopfenden von drei Etagen 5, in die der Einrastmechanismus, bestehend aus der Stange 7, den beiden Einrasthaken 8 und dem Hebel 9 — in der ganzen Breite der Etage — eingebaut ist. A zeigt die Stellung des Einrastmechanismus im eingerasteten Zustand — B im ausgerasteten Zustand — C bei gestapelten Etagen. Ansicht von unten.

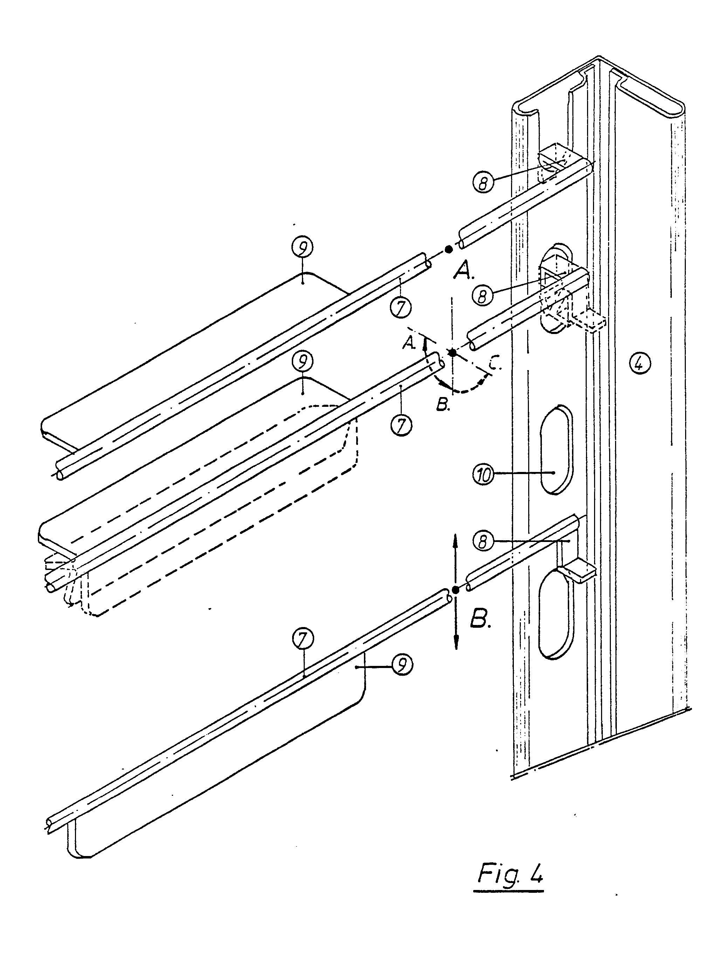

Figur 4 zeigt ebenfalls den Einrastmechanismus mit den Einraststellungen an einem Etagenträger 4 und den Löchern 10 als Rastmittel. In Stellung A sind die Einrasthaken 8 eingerastet, in Stellung B sind sie ausgerastet.

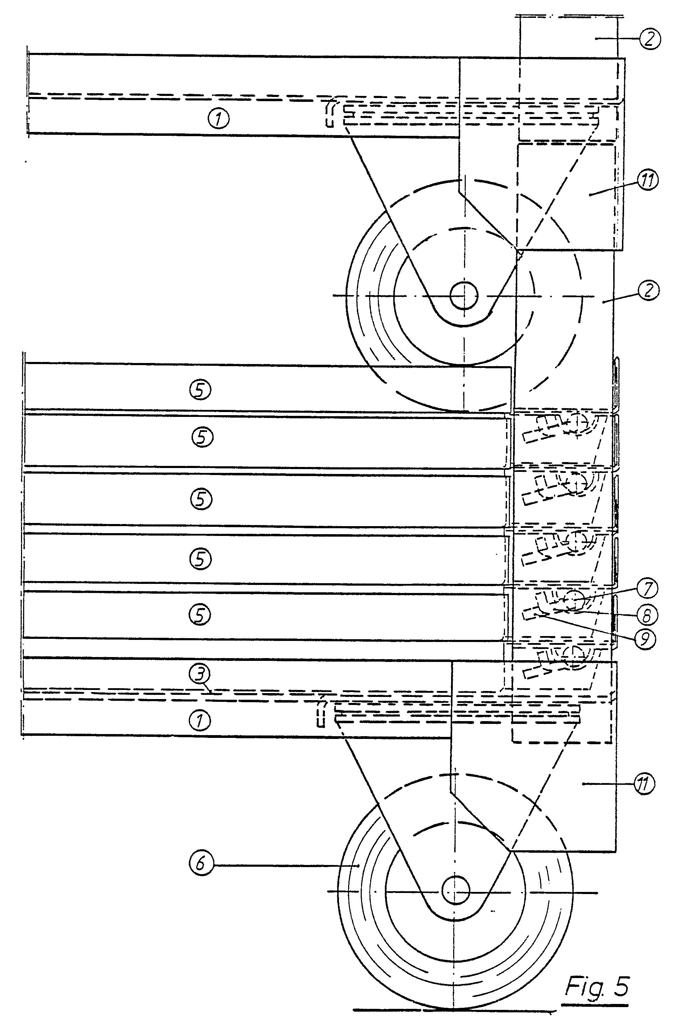

In Figur 5 wird das Aufeinandersetzen leerer Transportwagen am Beispiel einer Wagenecke gezeigt. Bei abgenommenen Etagenträgern 4 liegen die zum Lieferumfang gehörenden fünf Etagen 5 auf dem Bodenblech 3 des Fahrgestells 1 auf. Die Aufsatzecken 11, ebenfalls rechtwinkelig ausgebildet, passen bündig über dem oberen Teil der Aufsteckhalterung 2 und verhindern ein Abrutschen des oberen Fahrgestells 1.

**Patentansprüche**

1. Transport- und Verkaufs-Etagenwagen, insbesondere für Topfblumen und Pflanzen, bestehend aus einem, den Außenmaßen einer EURO-Palette angepaßten Fahrgestell, mit an jeder Wagenecke vorgesehenen winkelförmigen Aufsteckhalterungen (2) für herausnehmbare und aufsteckbare Etagenträger (4) aus Winkelhohlprofil, dessen innerer Schenkel jeweils mit einer durchgehenden Lochreihe (10) versehen ist, die als Rastmittel für höhenverstellbare Etagen dient, wobei eine Festlegung der Etagen in paralleler Anordnung, eine Schrägstellung und das durchgehende Absenken aller Etagen von der Einraststelle in der Lochreihe bis zum Bodenblech des Fahrgestells möglich ist, dadurch gekennzeichnet, daß ein Einrastmechanimus mit einer drehbaren Stange (7) vorgesehen ist die an ihren Enden jeweils einen Einrasthaken (8) aufweist, zwischen denen an der Stange ein Betätigungshebel (9) angebracht ist, durch dessen Betätigung die Einrasthaken in oder außer Eingriff mit der Lochreihe (10) in den Winkelhohlprofilen (4) bringbar sind.

2. Transport- und Verkaufswagen nach Anspruch 1, dadurch gekennzeichnet, daß die bis auf das Bodenblech (3) abgesenkten Etagen (5) durch ihre eigene Profilierung fest und unverrückbar aufeinanderliegen.

3. Transport- und Verkaufswagen nach Anspruch 1 und 2, dadurch gekennzeichnet, daß auf das Fahrgestell (1) mit den gestapelten Etagen weitere Fahrgestelle mit ihren Etagen unverrückbar aufgesetzt werden können.

**Claims**

1. Tiered transport and vending cart, especially for potted flowers and plants, consisting of a chassis adapted to the external dimensions of a EURO-Palette, with angle-shaped, attachable mounts (2) on each cart corner for removable and attachable tier supports (4), made of hollow angle section, whose inner side has a continuous row of holes (10), which serve as locks for the height adjustable tiers, with which it is possible to fix the tiers in parallel, at a tilted position and with continuous lowering of all tiers from the engagement point in the row of holes to the base plate of the chassis, characterized by the engaging mechanism consisting of a rotable bar (7), with an engaging hook (8) being fitted on its end, between which one actuating lever (9) is fitted on the rod, which when actuated shifts the engaging hooks in or out of engagement with the row of holes (10) in the hollow angle sections (4).

2. Transport and vending cart according to claim 1, characterized by the tiers (5) lowered down to the base plate (3), being firmly and immovably on top of each other through their own profiles.

3. Transport and vending cart according to Claims 1 and 2, characterized by additional chassis with tiers, being firmly attachable on the chassis (1) with the stacked tiers.

**Revendications**

1. Chariot de transport et de vente, en particulier pour plantes et fleurs en pots, composé d'un chassis adapté aux normes extérieures d'une EURO-palette, avec des broches de fixation (2) angulaires à chaque coin du chariot, prévues pour des plateaux étagés (4) amovibles et embrochables munis de profilés creux à leurs angles, et dont la jambe intérieure est respectivement munie d'une rangée de trous (10) continue qui sert de trame aux étages réglables verticalement ; la fixation des étages en ordre parallèle, leur positionnement en biais et l'abaissement continu de tous les étages à partir de leur position de fixation dans la rangée de trous jusqu'au plancher du chassis sont également possibles et caractérisés par le fait que le mécanisme de blocages de repos est composé de tiges pivotantes (7) qui sont munies à leur extrémité respectivement d'un crochet d'enclenchement (8), entre lesquels, sur la tige, est placé un levier de commande (9) dont la manipulation permet d'enclencher et de débrayer les crochets de fixation dans la rangée de trous (10) des profilés creux d'angles.

2. Chariot de transport et de vente selon la description 1 et caractérisé par le fait que les plateaux étagés (5), une fois abaissés jusqu'au plancher du chassis (3), sont emboîtés par leur propre profil fermement les uns sur les autres et sans déplacement possible.

3. Chariot de transport et de vente selon les descriptions 1 et 2, caractérisé par le fait que sur le chassis (1) avec ses plateaux étagés emboîtés, d'autres chassis peuvent être fermement fixés sans déplacement possible.

*Fig. 1*

**0 121 745**

*Fig. 2*

Ansicht von unten.

Fig. 3

0 121 745

Fig. 4

4

Fig. 5